# EUROPÄISCHE PATENTANMELDUNG

(11) **EP 1 566 731 A1**
(43) Veröffentlichungstag der Anmeldung: **24.08.2005**
(21) Anmeldenummer: 04003791.3
(22) Anmeldetag: 19.02.2004
(51) Int. Cl.: G06F 9/445

(54) **Verfahren zur Analyse und zum Aktualisieren von Anwendungsprogrammen auf Clientsystemen**

(71) Anmelder: O&O Services GmbH, 13507 Berlin (DE)
(72) Erfinder: Alperstädt, Frank, 12163 Berlin (DE); Kehrer, Olaf, 10781 Berlin (DE); Ganss, Michael, 12205 Berlin (DE)
(74) Vertreter: Bittner, Thomas L.

(57) **Zusammenfassung**

Die Erfindung bezieht sich auf ein Verfahren zum Analysieren eines Status von auf einer Clienteinrichtung installierten Anwendungsprogrammen, insbesondere zum Analysieren eines Aktualitätsstatus der installierten Anwendungsprogramme, sowie eine Clienteinrichtung zur Verwendung bei dem Verfahren. Es wird eine Übersicht mit den installierten Anwendungsprogrammen in Form erster elektronischer Übersichtsdaten erzeugt. Nach dem Ausbilden einer Datenverbindung zwischen der Clienteinrichtung und einer Servereinrichtung werden über die Datenverbindung zweite elektronische Übersichtsdaten von der Servereinrichtung an die Clienteinrichtung übertragen, die aktualisierte Produktinformationen für verfügbare Anwendungsprogramme betreffen. In der Clienteinrichtung werden die ersten elektronischen Übersichtsdaten und die zweiten elektronischen Übersichtsdaten verarbeitet und eine aktualisierte Übersicht mit einem oder allen der installierten Anwendungsprogramme in Form dritter elektronischer Übersichtsdaten erzeugt, indem den ersten elektronischen Übersichtsdaten für das eine oder alle der installierten Anwendungsprogramme elektronische Daten aus den zweiten elektronischen Übersichtsdaten für die verfügbaren Anwendungsprogramme zugeordnet werden. Die aktualisierte Übersicht wird über eine Anzeigeeinrichtung ausgegeben, die an die Clienteinrichtung gekoppelt ist. Mit Hilfe des Verfahrens ist eine effiziente Handhabung bei der automatischen Statuserfassung und der Aktualisierung der Anwendungsprogramme auf der Clienteinrichtung ermöglicht.

## Beschreibung

Die Erfindung betrifft ein Verfahren zum Analysieren eines Status von auf einer Clienteinrichtung installierten Anwendungsprogrammen, insbesondere zum Analysieren eines Aktualitätszustands der installierten Anwendungsprogramme, sowie einer Clienteinrichtung zur Verwendung bei dem Verfahren.

Zur üblichen Konfiguration einer Computereinrichtung gehören Anwendungsprogramme, die auf der Computereinrichtung installiert sind, so daß sie mit Hilfe eines oder mehrerer Betriebssysteme auf der Computereinrichtung zum Durchführen von Anwendungen ausgeführt werden können. Zu den Anwendungsprogrammen gehören beispielsweise Programme für die Textverarbeitung, die Tabellenkalkulation oder zum Anfertigen von Zeichnungen. Zusätzliche Anwendungsprogramme können mit Hilfe einer Installationsprozedur auf der Computereinrichtung installiert werden. In gleicher Weise ist es möglich, bereits installierte Anwendungsprogramme von der Computereinrichtung zu löschen, indem eine Prozedur zur Deinstallation ausgeführt wird.

Im Zusammenhang mit Anwendungsprogrammen ist es zunehmend üblich, daß fortlaufend neue Versionen des Anwendungsprogramms von dem jeweiligen Hersteller zur Verfügung gestellt werden, die gegenüber Vorgängerversionen des Anwendungsprogramms in der Regel eine erweiterte Funktionalität zur Verfügung stellen. Die Aktualisierung von Anwendungsprogrammen erfolgt manchmal jedoch auch aus dem Grund, daß Fehlerquellen in der Vorgängerversion beseitigt werden sollen. Zur Aktualisierung der installierten Anwendungsprogramme auf der Computereinrichtung kann ein entsprechendes Aktualisierungsprogramm ausgeführt werden, das auf einem externen Speichermedium gespeichert ist, beispielsweise einer CD-ROM oder einer Diskette.

Heute werden Aktualisierungen "(updates") aber auch online über das Internet von Herstellern/Anbietern zur Verfügung gestellt. Bei einer Online-Aktualisierung von der Computereinrichtung, die dann als Clienteinrichtung arbeitet, eine Datenverbindung zu einer Servereinrichtung hergestellt, die Teil eines Netzwerkes ist, bei dem es sich bevorzugt um das Internet handelt. Der Benutzer der Clienteinrichtung wählt dann die von dem jeweiligen Hersteller/Anbieter genutzte Servereinrichtung an, um von dieser die Aktualisierung, nämlich die neue Version, für das von diesem Hersteller/Anbieter angebotene Anwendungsprogramm auf die Clienteinrichtung herunter zu laden. In ähnlicher Weise können auch neue Anwendungsprogramme von Benutzern erworben und heruntergeladen werden. Hat ein Benutzer auf seiner Computereinrichtung eine Vielzahl von Anwendungsprogrammen installiert, so ist die Pflege der installierten Anwendungsprogramme, insbesondere zur fortdauernden Aktualisierung dieser Anwendungsprogramme, für den Benutzer mit einem erheblichen Aufwand verbunden, da er stets die individuellen Servereinrichtungen der verschiedenen Hersteller/Anbieter anwählen muß, um sich über aktuelle Versionen seiner Anwendungsprogramme zu informieren und diese gegebenenfalls herunter zu laden.

Aufgabe der Erfindung ist es, ein verbessertes Verfahren zum Analysieren eines Status von auf einer Clienteinrichtung installierten Anwendungsprogrammen sowie eine Clienteinrichtung anzugeben, die eine erleichterte und mit weniger Aufwand ausführbare automatische Pflege von Anwendungsprogrammen auf einer Computereinrichtung ermöglichen.

Diese Aufgabe wird erfindungsgemäß durch ein Verfahren nach dem unabhängigen Anspruch 1 sowie eine Clienteinrichtung nach dem unabhängigen Anspruch 13 gelöst.

Die Erfindung umfaßt insbesondere den Gedanken, ein Verfahren zum Analysieren eines Status von auf einer Clienteinrichtung installierten Anwendungsprogrammen, insbesondere zum Analysieren eines Aktualitätsstatus der installierten Anwendungsprogramme, mit den folgenden Schritten vorzuschlagen: Erzeugen einer Übersicht mit den installierten Anwendungsprogrammen in Form erster elektronischer Übersichtsdaten; Ausbilden einer Datenverbindung zwischen der Clienteinrichtung und einer Servereinrichtung, wobei über die Datenverbindung elektronische Daten zwischen der Clienteinrichtung und der Servereinrichtung ausgetauscht werden können; Vorhalten von aktualisierten Produktinformationen für verfügbare Anwendungsprogramme in Form zweiter elektronischer Übersichtsdaten in der Servereinrichtung; Übertragen der aktualisierten Produktinformationen für die verfügbaren Anwendungsprogramme in Form der zweiten elektronischen Übersichtsdaten von der Servereinrichtung an die Clienteinrichtung über die Datenverbindung; Verarbeiten der ersten elektronischen Übersichtsdaten und der zweiten elektronischen Übersichtsdaten in der Clienteinrichtung und Erzeugen einer aktualisierten Übersicht mit einem oder allen der installierten Anwendungsprogramme in Form dritter elektronischer Übersichtsdaten, indem zum Erzeugen von Statusdaten, die von den dritten elektronischen Übersichtsdaten umfaßt sind, den ersten elektronischen Übersichtsdaten für das eine oder alle der installierten Anwendungsprogramme elektronische Daten aus den zweiten elektronischen Übersichtsdaten für die verfügbaren Anwendungsprogramme zugeordnet werden; und Ausgeben der aktualisierten Übersicht in Form der dritten elektronischen Übersichtsdaten über eine Anzeigeeinrichtung, die an die Clienteinrichtung gekoppelt ist.

Zur Verwendung beim Ausführen des Verfahrens wird erfindungsgemäß eine Clienteinrichtung vorgeschlagen, die die folgenden Merkmale aufweist: installierte Anwendungsprogramme, die auf der Clienteinrichtung lauffähig installiert sind; Erzeugungsmittel zum Erzeugen einer Übersicht mit den installierten Anwendungsprogrammen in Form erster elektronischer Übersichtsdaten; Schnittstellenmittel zum Ausbilden einer Datenverbindung zwischen der Clienteinrichtung und einer Servereinrichtung, wobei über die Datenverbindung elektronische Daten zwischen der Clienteinrichtung und der Servereinrichtung ausgetauscht werden können; Empfangsmittel zum Empfangen von aktualisierten Produktinformationen für verfügbare Anwendungsprogramme in Form zweiter elektronischer Übersichtsdaten von der Servereinrichtung über die Datenverbindung; Verarbeitungsmittel zum Verarbeiten der ersten elektronischen Übersichtsdaten und der zweiten elektronischen Übersichtsdaten in der Clienteinrichtung und Erzeugen einer aktualisierten Übersicht mit einem oder allen der installierten Anwendungsprogramme in Form dritter elektronischer Übersichtsdaten, indem zum Erzeugen von Statusdaten, die von den dritten elektronischen Übersichtsdaten umfaßt sind, den ersten elektronischen Übersichtsdaten für das eine oder alle der installierten Anwendungsprogramme elektronische Daten aus den zweiten elektronischen Übersichtsdaten für die verfügbaren Anwendungsprogramme zugeordnet werden; und eine Ausgabeeinrichtung zum Ausgeben der aktualisierten Übersicht in Form der dritten elektronischen Übersichtsdaten.

Der wesentliche Vorteil, welcher mit der Erfindung gegenüber dem Stand der Technik erreicht wird, besteht darin, daß zunächst in der Clienteinrichtung automatisch eine vollständige Übersicht mit den auf der Clienteinrichtung installierten Anwendunsgprogramme erzeugt wird, die dann mit aktualisierten Produktinformationen für verfügbare Anwendungsprogramme gemeinsam in der Clienteinrichtung verarbeitet wird, um für den Benutzer der Clienteinrichtung eine aktualisierte Übersicht mit einem oder allen der installierten Anwendungsprogramme zu erzeugen und über eine Anzeigeeinrichtung auszugeben. Auf diese Weise wird dem Benutzer in komprimierter Form automatisch Information zur Verfügung gestellt, aus der er den aktuellen Status hinsichtlich der Anwendungsprogramme auf der Clienteinrichtung entnehmen kann. Für den Benutzer ist es im Vergleich zum Stand der Technik nicht notwendig einzeln eine Verbindung zu der jeweiligen Servereinrichtung verschiedener Hersteller/Anbieter von Anwendungsprogrammen aufzubauen, um den Status der installierten Programme im Vergleich zu verfügbaren Anwendungsprogrammen zu analysieren. Der Vergleich kann sich auf unterschiedliche Aspekte eines Anwendungsprogramms beziehen, zum Beispiel die in einem Programm verfügbaren Funktionalitäten, Lizenzierungsbedingungen und/oder Programmneuangebote. Durch die Maßnahme des Vorhaltens von aktualisierter Produktinformation für mehrere verfügbare Anwendungsprogramme in der Servereinrichtung ist es lediglich notwendig, diese aktualisierte Produktinformation an die Clienteinrichtung zu übertragen. Hier wird diese aktualisierte Produktinformation dann wiederum genutzt, um eine Gesamtübersicht für die auf der Clienteinrichtung installierten Anwendungsprogramme zu ergänzen, so daß eine optimierte Benutzerinformation erzeugt und dem Benutzer angezeigt wird. Zeit und Kostenaufwand werden eingespart.

Eine zweckmäßige Ausgestaltung der Erfindung sieht die weiteren Schritte vor: Erzeugen von Bezeichnungsinformationen in Form elektronischer Bezeichnungsdaten und Versionsinformationen in Form elektronischer Versionsdaten für die installierten Anwendungsprogramme beim Erzeugen der Übersicht, wobei die elektronischen Bezeichnungsdaten und die elektronischen Versionsdaten von den ersten elektronischen Übersichtsdaten umfaßt sind; und Vorhalten von Produktbezeichnungsinformationen in Form elektronischer Produktbezeichnungsdaten und von Produktversionsinformationen in Form elektronischer Produktversionsdaten für die verfügbaren Anwendungsprogramme in der Servereinrichtung, wobei die elektronischen Produktbezeichnungsdaten und die elektronischen Produktversionsdaten von den zweiten elektronischen Übersichtsdaten umfaßt sind; wobei beim Verarbeiten der ersten elektronischen Übersichtsdaten und der zweiten elektronischen Übersichtsdaten in der Clienteinrichtung die Produktversionsdaten in der aktualisierten Übersicht für das eine oder alle der installierten Anwendungsprogramme den Versionsdaten zugeordnet werden, soweit beim Verarbeiten eine oder mehrere Entsprechungen zwischen den elektronischen Bezeichnungsdaten und den elektronischen Produktbezeichnungsdaten festgestellt werden. Auf diese Weise kann der Benutzer automatisch darüber informiert werden, welcher Version des Anwendungsprogramms sein installiertes Anwendungsprogramm entspricht und/oder welche abweichende Versionen existieren.

Bei einer bevorzugten Fortbildung der Erfindung ist vorgesehen, daß eine Benutzereingabe eines Benutzers über eine mit der Clienteinrichtung verbundene Eingabeeinrichtung nach dem Ausgeben der aktualisierten Übersicht mit der Clienteinrichtung erfaßt und ausgewertet wird, indem eine der Benutzereingabe entsprechende Operation, die sich auf die aktualisierte Übersicht bezieht, mit Hilfe der Clienteinrichtung veranlaßt wird. Auf diese Weise ist es dem Benutzer ermöglicht, unmittelbar auf die Anzeige der aktualisierten Übersicht zu reagieren, um den Status der installierten Anwendungsprogramme benutzerdefiniert anzupassen.

Bei einer vorteilhaften Ausführungsform der Erfindung kann vorgesehen sein, daß mit der Operation eine automatische Aktualisierung des einen oder aller installierten Anwendungsprogramme aus der aktualisierten Übersicht veranlaßt wird, indem ein Aktualisierungsprogramm in die Clienteinrichtung geladen und hier ausgeführt wird. In ähnlicher Weise kann eine Ausgestaltung der Erfindung vorsehen, daß mit der Operation eine automatische Deinstallation des einen oder aller installierten Anwendungsprogramme aus der aktualisierten Übersicht veranlaßt wird, indem ein Deinstallationsprogramm in der Clienteinrichtung ausgeführt wird. Hierdurch wird es dem Benutzer ermöglicht, seine installierten Anwendungsprogramme zu ergänzen oder einzelne hiervon zu löschen, beispielsweise weil sie veraltet sind.

Bei einer bevorzugten Weiterbildung der Erfindung ist vorgesehen, daß die aktualisierte Übersicht Informationen aus den aktualisierten Produktinformationen umfaßt, die ein nicht-installiertes Anwendungsprogramm betreffen, das auf der Clienteinrichtung nicht installiert ist, und daß mit der Operation eine automatische Installierung des nicht-installierten Anwendungsprogramms auf der Clienteinrichtung veranlaßt wird, indem ein Installationsprogramm in die Clienteinrichtung geladen und hier ausgeführt wird. Hierdurch wird es ermöglicht, daß als Reaktion auf die erfaßte Benutzereingabe unmittelbar ein neues Anwendungsprogramm auf der Clienteinrichtung installiert wird, auf das der Benutzer in der aktualisierten Übersicht aufmerksam gemacht wurde und welches bisher nicht installiert ist. Das Laden des bisher nicht installierten Anwendungsprogramms in die Clienteinrichtung kann von oder über die Servereinrichtung oder aber auch über eine Datenverbindung erfolgen, in die die Servereinrichtung nicht eingebunden ist.

Eine optimale Erzeugung der Übersicht mit den installierten Anwendungsprogrammen wird bei einer zweckmäßigen Ausgestaltung der Erfindung dadurch erreicht, daß beim Erzeugen der Übersicht mit den installierten Anwendungsprogrammen in Form der ersten elektronischen Übersichtsdaten in der Clienteinrichtung eine Betriebsfunktion, die von einem Betriebssystem auf der Clienteinrichtung zur Verfügung gestellt wird, und/oder eine Zusatzfunktion verwendet werden, die zusätzlich zum Betriebssystem auf der Clienteinrichtung implementiert ist.

Eine möglichst große Aktualität der Übersicht mit den installierten Anwendungsprogrammen wird bei einer bevorzugten Ausführungsform der Erfindung dadurch gewährleistet, daß das Erzeugen der Übersicht mit den installierten Anwendungsprogrammen in Form der ersten elektronischen Übersichtsdaten automatisch nach einem Start der Clienteinrichtung ausgeführt wird.

Um es dem Benutzer zu ermöglichen, sich jederzeit einen Überblick über den Status der auf der Clienteinrichtung installierten Anwendungsprogramme im Vergleich zu verfügbaren Anwendungsprogrammen zu verschaffen, sieht eine bevorzugte Weiterbildung der Erfindung vor, daß das Erzeugen der Übersicht mit den installierten Anwendungsprogrammen in Form der ersten elektronischen Übersichtsdaten als Reaktion auf eine Benutzereingabe ausgeführt wird.

Um die Informationen über die installierten Anwendungsprogramme auf der Clienteinrichtung auch zu einem späteren Zeitpunkt nach deren Generierung zur Verfügung stellen zu können, kann bei einer zweckmäßigen Fortbildung der Erfindung vorgesehen sein, daß die Übersicht mit den installierten Anwendungsprogrammen in Form der ersten elektronischen Übersichtsdaten in einem Speicher der Clienteinrichtung gespeichert wird. Hierdurch ist es auch ermöglicht, daß bei einer erneuten Erzeugung der Übersicht mit den installierten Anwendungsprogrammen auf diese gespeicherten Daten zurückgegriffen wird, die dann lediglich verändert und/oder ergänzt werden.

Um dem Benutzer die Orientierung bei der ausgegebenen aktualisierten Übersicht zu erleichtem, sieht eine vorteilhafte Ausführungsform der Erfindung vor, daß die installierten Anwendungsprogramme in der Übersicht und/oder die verfügbaren Anwendungsprogramme in der aktualisierten Produktinformation und/oder das eine oder alle der installierten Anwendungsprogramme in der aktualisierten Übersicht in Anwendungsgruppen unterteilt werden.

Ein überall verfügbarer Zugang der Clienteinrichtung zu den aktualisierten Produktinformationen wird bei einer zweckmäßigen Weiterbildung der Erfindung dadurch gewährleistet, daß die Servereinrichtung im Internet gebildet ist und daß die Datenverbindung als eine Internet-Verbindung zwischen der Clienteinrichtung und der Servereinrichtung ausgebildet wird.

Die Erfindung wird im folgenden anhand von Ausführungsbeispielen unter Bezugnahme auf eine Zeichnung näher erläutert. Hierbei zeigen:
- Figur 1: eine schematische Darstellung einer Anordnung mit einer Clienteinrichtung und einer Servereinrichtung; und
- Figur 2: eine detailliertere schematische Darstellung der Clienteinrichtung und der Servereinrichtung nach Figur 1.

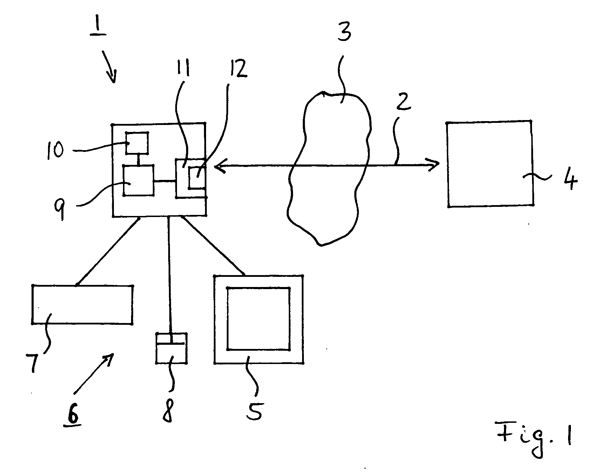

Figur 1 zeigt eine schematische Darstellung einer Anordnung mit einer Clienteinrichtung 1, bei der es sich um einen Computer üblicher Bauweise handelt, beispielsweise einen Personalcomputer, und die über eine Datenverbindung 2 über das Internet 3 mit einer Servereinrichtung 4 verbunden ist, die selbst Teil des Internets 3 sein kann. Die Clienteinrichtung verfügt über eine Ausgabeeinrichtung 5 in Form eines Bildschirms sowie eine Eingabeeinrichtung 6 in Form einer Tastatur 7, mit der ein Benutzer Benutzereingaben eingeben kann. Bei dem dargestellten Ausführungsbeispiel umfaßt die Eingabeeinrichtung 6 noch eine Maus 8. Die Clienteinrichtung 1 verfügt über eine Verarbeitungseinrichtung 9 zum Verarbeiten elektronischer Daten, bei es sich insbesondere um eine zentrale Verarbeitungseinheit eines üblichen Rechners handelt, sowie einen Speicher 10 zum Speichern von elektronischen Daten.

Die Datenverbindung 2 wird über eine Schnittstelle 11 gebildet, die Empfangsmittel 12 zum Empfangen elektronischer Daten von der Servereinrichtung 4 über die Datenverbindung 2 umfaßt.

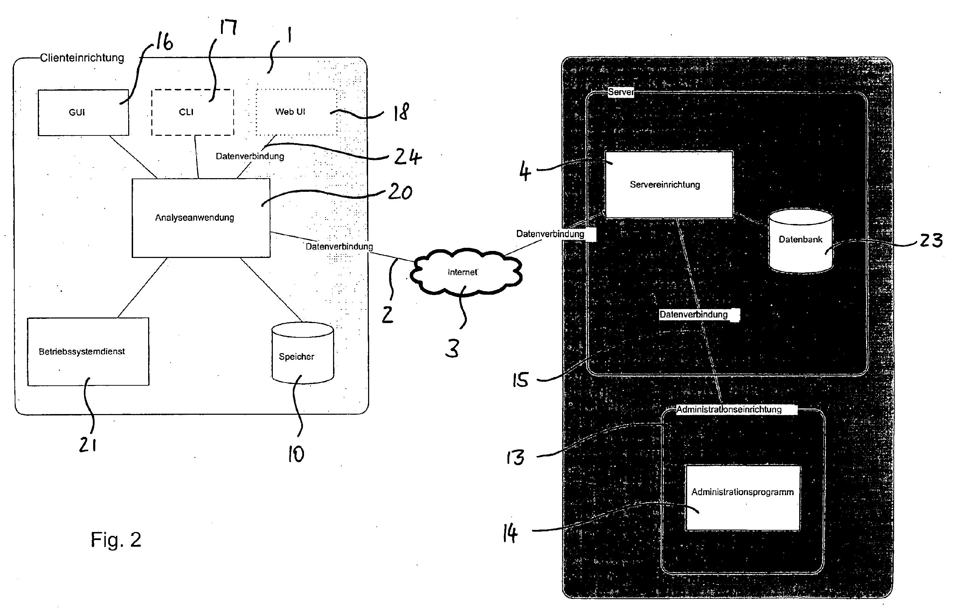

Figur 2 zeigt eine detailliertere Darstellung für Teile der Anordnung in Figur 1 mit der Servereinrichtung 4 und der Clienteinrichtung 1, wobei ein Administrationsprogramm 14 vorgesehen ist, das in eine Administrationseinrichtung 13 geladen wird. Über eine Datenverbindung 15 werden die von der Servereinrichtung 4 vorgehaltenen Anwendungsprogramme eingepflegt und aktualisiert.

Der Benutzer der Clienteinrichtung 1 kann auf die Analyseanwendung 20 mittels verschiedener Benutzeroberflächen zugreifen. Bei der Benutzeroberfläche GUI 16 handelt es sich um eine graphische Benutzeroberfläche, bei der Benutzeroberfläche CLI 17 (CLI - "Command Line Interface") handelt es sich um eine kommandozeilenbasierte Oberfläche, die es beispielsweise ermöglicht, die Analyseanwendung 20 automatisiert, d. h. durch ein Programm, zu bedienen, um zum Beispiel zeitgesteuert eine Aktualisierung der Anwendungsprogramme auf der Clienteinrichtung 1 zu veranlassen.

Des weiteren ist eine webbasierte Oberfläche Web UI 18 vorgeshen, die es beispielsweise ermöglicht, die Analyseanwendung 20 ferngesteuert, d. h. über eine Datenverbindung 24, zu bedienen. Die Datenverbindung 24 kann auch zwischen der Clienteinrichtung 1 und einer entfernt betriebenen Datenverarbeitungseinrichtung ausgebildet werden.

Im folgenden wird unter Bezugnahme auf die Figuren 1 und 2 ein Verfahren zum Analysieren eines Status von auf der Clienteinrichtung 1 installierten Anwendungsprogrammen und deren automatische Aktualisierung und/oder Ergänzung näher erläutert. Diese erfolgt, indem auf einzelne Abschnitte bei einer beispielhaften Umsetzung des Verfahrens eingegangen wird.

### 1. Installierte Anwendungsprogramme identifizieren

Auf der Clienteinrichtung 1 sind mit Hilfe eines Anwendungsprogramms (Analyseanwendung) Softwaremittel 20 vorgesehen, um die zunächst die auf der Clienteinrichtung 1 installierten Anwendungsprogramme zu identifizieren und die hierbei gesammelten Informationen in einer Übersicht zusammen zu stellen. Beim Start der Clienteinrichtung 1 oder auf Initiative des Benutzers wird eine Suche nach installierten Anwendungsprogrammen in der Clienteinrichtung 1 durchgeführt. Anwendungsprogramme sind beliebige Software-Produkte, die auf der Clienteinrichtung 1 lauffähig installierbar sind. Die Suche wird beispielsweise mit Hilfe eines vom auf der Clienteinrichtung 1 installierten Betriebssystem bereitgestellten Dienstes durchgeführt, beispielsweise Microsoft Windows Installer Service 21. Nicht standardmäßig installierte Anwendungsprogramme können mittels eines gesonderten Algorithmus gesucht werden, beispielsweise anhand der Dateitypen. Zu diesem Zweck ist auf der Clienteinrichtung 1 ein gesondertes Anwendungsprogramm installierbar. Zu suchende Dateitypen sind zum Beispiel: *.EXE, *.COM - sogenannte ausführbare Dateien oder *.DLL, *.SYS - sogenannte Bibliotheken.

Die bei der Suche nach installierten Anwendungsprogrammen gewonnene Information kann in der Clienteinrichtung 1 in dem Speicher 10 gespeichert werden, um bei einem erneuten Suche einen schnelleren Zugriff auf die Daten zu haben. Ergebnis des Ablaufs ist eine Übersicht, bevorzugt in Form einer Liste, von Anwendungsprogrammen, die auf der Clienteinrichtung 1 installiert sind (Übersicht A).

### 2. Verfügbare Anwendungsprogramme identifizieren

Nach Eintritt eines Ereignisses wird von der Servereinrichtung 4 eine Übersicht mit zur Verfügung stehenden Anwendungsprogrammen angefordert, die dort in einer Datenbank 23 vorgehalten wird. Das Ereignis kann zum Beispiel sein: (a) eine automatische Prüfung, die durch die Analyseanwendung ausgelöst wird; (b) eine manuelle Prüfung, die durch den Benutzer initiiert wird; oder (c) das Eintreten von Ereignissen, zum Beispiel der Ablauf einer Frist, das Erreichen eines Datums, die Neuinstallation von Software oder dergleichen.

Von der Servereinrichtung 4 wird mittels eines Netzwerkprotokolles, beispielsweise http, die Übersicht mit aktuell zur Verfügung stehenden Anwendungsprogrammen abgerufen. Die Übersicht kann folgende Informationen zu jedem Anwendungsprogramm enthalten:
a. Eindeutiger Identifizierer (Produktbezeichnungsinformation)
b. Verfügbare Versionen (Produktversionsinformation)
c. Adresse, woher das Anwendungsprogramm bezogen werden kann, zum Beispiel ein URI gemäß RFC 2396 [http://www.faqs.org/rfcs/rfc2396.html]).
d. Preis des Anwendungsprogramms
e. Kategorie, zu der das Anwendungsprogramm gehört (zum Beispiel Antivirensoftware, Musiksoftware etc.)
f. Wichtigkeit des Anwendungsprogramms (zum Beispiel "wichtig" für eine AntivirenSoftware, "empfohlen" für eine Musiksoftware, "optional" für eine Bildschirmschoner-Software)
g. Beschreibung
h. Abhängigkeiten (zum Beispiel: Anwendungsprogramm setzt PDF-Viewer voraus)

Das von der Servereinrichtung 4 zu der Clienteinrichtung 1 übertragene Datenvolumen kann durch Nutzung des Zeitpunkts des letzten Abrufs der Übersicht reduziert werden, indem nur die Daten übertragen werden, die sich seit dem letzten Abruf geändert haben. Da in diesem Falle individuelle Daten des Benutzers der Clienteinrichtung 1 übertragen werden, kann der Benutzer der Clienteinrichtung 1 diesen Datenreduktionsmechanismus optional abschalten. Ergebnis des Ablaufs ist eine Übersicht von Anwendungsprogrammen, die für die Installation auf der Clienteinrichtung 1 zur Verfügung stehen (Übersicht B).

### 3. Aktualisierte Übersicht C anzeigen

Die Übersichten A und B werden zunächst zu einer aktualisierten Übersicht C verarbeitet, die zu jedem Anwendungsprogramm aus der Übersicht A und/oder B einige oder alle der folgenden Informationen enthalten kann:
a. Produktname (Bezeichnungsinformation/Produktbezeichnungsinformation)
b. installierte Version (Versionsinformation aus Übersicht A)
c. zur Verfügung stehende Versionen (aus Übersicht B)
d. Priorität (aus Übersicht B)
e. Kategorie (aus Übersicht B)
f. Preis

Die aktualisierte Übersicht C wird dem Benutzer der Clienteinrichtung 1 über die Ausgabeeinrichtung 5 angezeigt, vorzugsweise in tabellarischer Form. Zu jedem Eintrag in der aktualisierten Übersicht C kann der Benutzer mit Hilfe der Eingabeeinrichtung 6 eine Reihe von Aktionen festlegen (Warenkorb-Metapher):
a. Neue Version installieren, wenn vorhanden
b. Anwendungsprogramm deinstallieren
c. Anwendungsprogramm kaufen
d. Weitere Informationen anzeigen

Die ausgewählten Aktionen werden in einer separaten Übersicht (Übersicht D), einer Art elektronischem Warenkorb, geführt und dem Benutzer angezeigt.

Durch Informationen über Abhängigkeiten aus der Übersicht B können von der Analyseanwendung weitere Aktionen automatisch vorgeschlagen werden, zum Beispiel kann bei Auswahl eines elektronischen Buches ein automatischer Vorschlag für verfügbare PDF-Viewer gemacht werden.

### 4. Gewünschte Aktionen ausführen

Der Benutzer der Clienteinrichtung 1 kann zu einem von ihm gewünschten Zeitpunkt die gemäß Abschnitt 3. ausgewählten Aktionen ausführen ("Zur Kasse gehen"). Zur Installation oder zum Aktualisieren werden die Anwendungsprogramme gemäß der Information aus der Übersicht B (Adresse) von der Analyseanwendung mittels eines Netzwerkprotokolls heruntergeladen. Dies können beispielsweise sein:
a. Anonyme Downloads per FTP
b. Anonyme Downloads per HTTP
c. Downloads, die zuvor eine Registrierung erfordern
d. Downloads, die zuvor eine Lizenzierung (Erwerb der Lizenz) erfordern

Nach dem Herunterladen eines oder mehrerer Anwendungsprogramme müssen diese installiert werden. Die Installation und Deinstallation auf der Clienteinrichtung 1 erfolgt mittels vom Betriebssystem bereitgestellter Dienste, zum Beispiel Microsoft Windows Installer Services. Nach der Installation oder beim nächsten Start der Analyseanwendung wird dann die neue Version des Anwendungsprogrammes in die Datenbank (Übersicht A) eingetragen.

Der Kauf eines Anwendungsprogrammes kann mittels zweier Szenarien ausgeführt werden:
(i) Der Benutzer gibt Bezahlinformationen, beispielsweise eine Kreditkartennummer, mit Hilfe der Eingabeeinrichtung 6 ein. Die Analyseanwendung überträgt diese Information mittels eines Netzwerkprotokolls (beispielsweise http) zur Servereinrichtung 4 und bezieht von dieser einen Lizenzcode, der mittels vom Betriebssystem bereitgestellter Dienste oder durch einen von der Analyseanwendung bereitgestellten Mechanismus dem gekauften Anwendungsprogramm zugänglich gemacht wird.
(ii) Es wird ein Webbrowser mit einer speziellen URI geöffnet, der es dem Benutzer ermöglicht, das Anwendungsprogramm interaktiv zu erwerben.

### 5. Anwendungsprogramme suchen

Die Analyseanwendung beinhaltet einen Suchmechanismus, der es dem Benutzer ermöglicht, komfortabel nach Anwendungsprogrammen aus der Übersicht B zu suchen, zum Beispiel nach Schlagworten aus der Beschreibung, dem Namen, der Kategorie oder dergleichen. Beim Start der Analyseanwendung kann diese auf der Servereinrichtung 4 überprüfen, ob neue Anwendungsprogramme angeboten werden. Neue Anwendungsprogramme kann bedeuten:
a. Aktualisierungsmodule bereits installierter Anwendungsprogramme
b. Installationsmodule für neue Anwendungsprogramme

Hierbei wird jedes Anwendungsprogramm in Kategorien eingeteilt, die eine Zuordnung des Anwendungsprogramms ermöglicht, zum Beispiel als Anti-Viren-Programm, Defragmentierungsprogramm oder Datenwiederherstellungsprogramm. Der Benutzer kann neue Anwendungsprogramme auswählen und installieren. Hierbei wird der im Abschnitt 3. oben erläuterte Ablauf analog angewendet. Der Hersteller/Anbieter des Anwendungsprogrammes muß eine entsprechende Prozedur hierfür zur Verfügung stellen.

Der Benutzer kann sich auf der Clienteinrichtung 1 im Rahmen der Analyseanwendung auch ein persönliches Profil erstellen, in dem seine Vorlieben für bestimmte Anwendungsprogrammtypen (zum Beispiel Action-Spiele) abgelegt sind. Aufgrund dieses Profils werden dann die neuen Anwendungsprogramme annonciert, d.h. der Benutzer erhält eine automatische Mitteilung in einem Dialog, daß ein neues Anwendungsprogramm mit seinem Profil übereinstimmt.

Alle Aktionen, die gemäß den vorhergehenden Erläuterungen auf Veranlassung des Benutzers ausgeführt werden können, werden von der Analyseanwendung protokolliert und können vom Benutzer nachvollzogen werden, um beispielsweise herauszufinden, wann eine neue Version eines Anwendungsprogrammes installiert wurde.

Die in der vorstehenden Beschreibung, der Zeichnung und den Ansprüchen offenbarten Merkmale der Erfindung können sowohl einzeln als auch in beliebiger Kombination für die Verwirklichung der Erfindung in ihren verschiedenen Ausführungsformen von Bedeutung sein.

## Patentansprüche

1. Verfahren zum Analysieren eines Status von auf einer Clienteinrichtung (1) installierten Anwendungsprogrammen, insbesondere zum Analysieren eines Aktualitätsstatus der installierten Anwendungsprogramme, wobei das Verfahren die folgenden Schritte umfaßt:
- Erzeugen einer Übersicht mit den installierten Anwendungsprogrammen in Form erster elektronischer Übersichtsdaten;
- Ausbilden einer Datenverbindung (2) zwischen der Clienteinrichtung (1) und einer Servereinrichtung (4), wobei über die Datenverbindung (2) elektronische Daten zwischen der Clienteinrichtung (1) und der Servereinrichtung (4) ausgetauscht werden können;
- Vorhalten von aktualisierten Produktinformationen für verfügbare Anwendungsprogramme in Form zweiter elektronischer Übersichtsdaten in der Servereinrichtung (4);
- Übertragen der aktualisierten Produktinformationen für die verfügbaren Anwendungsprogramme in Form der zweiten elektronischen Übersichtsdaten von der Servereinrichtung (4) an die Clienteinrichtung (1) über die Datenverbindung (2);
- Verarbeiten der ersten elektronischen Übersichtsdaten und der zweiten elektronischen Übersichtsdaten in der Clienteinrichtung (1) und Erzeugen einer aktualisierten Übersicht mit einem oder allen der installierten Anwendungsprogramme in Form dritter elektronischer Übersichtsdaten, indem zum Erzeugen von Statusdaten, die von den dritten elektronischen Übersichtsdaten umfaßt sind, den ersten elektronischen Übersichtsdaten für das eine oder alle der installierten Anwendungsprogramme elektronische Daten aus den zweiten elektronischen Übersichtsdaten für die verfügbaren Anwendungsprogramme zugeordnet werden; und
- Ausgeben der aktualisierten Übersicht in Form der dritten elektronischen Übersichtsdaten über eine Anzeigeeinrichtung (5), die an die Clienteinrichtung (1) gekoppelt ist.

2. Verfahren nach Anspruch 1, **gekennzeichnet durch** die weiteren Schritte:
- Erzeugen von Bezeichnungsinformationen in Form elektronischer Bezeichnungsdaten und Versionsinformationen in Form elektronischer Versionsdaten für die installierten Anwendungsprogramme beim Erzeugen der Übersicht, wobei die elektronischen Bezeichnungsdaten und die elektronischen Versionsdaten von den ersten elektronischen Übersichtsdaten umfaßt sind; und
- Vorhalten von Produktbezeichnungsinformationen in Form elektronischer Produktbezeichnungsdaten und von Produktversionsinformationen in Form elektronischer Produktversionsdaten für die verfügbaren Anwendungsprogramme in der Servereinrichtung (1), wobei die elektronischen Produktbezeichnungsdaten und die elektronischen Produktversionsdaten von den zweiten elektronischen Übersichtsdaten umfaßt sind;
wobei beim Verarbeiten der ersten elektronischen Übersichtsdaten und der zweiten elektronischen Übersichtsdaten in der Clienteinrichtung (1) die Produktversionsdaten in der aktualisierten Übersicht für das eine oder alle der installierten Anwendungsprogramme den Versionsdaten zugeordnet werden, soweit beim Verarbeiten eine oder mehrere Entsprechungen zwischen den elektronischen Bezeichnungsdaten und den elektronischen Produktbezeichnungsdaten festgestellt werden.

3. Verfahren nach Anspruch 1 oder 2, **dadurch gekennzeichnet, daß** eine Benutzereingabe eines Benutzers über eine mit der Clienteinrichtung (1) verbundene Eingabeeinrichtung (6) nach dem Ausgeben der aktualisierten Übersicht mit Hilfe der Clienteinrichtung (1) erfaßt und ausgewertet wird, indem eine der Benutzereingabe entsprechende Operation, die sich auf die aktualisierte Übersicht bezieht, durch die Clienteinrichtung (1) veranlaßt wird.

4. Verfahren nach Anspruch 3, **dadurch gekennzeichnet, daß** mit der Operation eine automatische Aktualisierung des einen oder aller installierten Anwendungsprogramme aus der aktualisierten Übersicht veranlaßt wird, indem ein Aktualisierungsprogramm in die Clienteinrichtung (1) geladen und hier ausgeführt wird.

5. Verfahren nach Anspruch 3, **dadurch gekennzeichnet, daß** mit der Operation eine automatische Deinstallation des einen oder aller installierten Anwendungsprogramme aus der aktualisierten Übersicht veranlaßt wird, indem ein Deinstallationsprogramm in der Clienteinrichtung (1) ausgeführt wird.

6. Verfahren nach einem der Ansprüche 3 bis 5, **dadurch gekennzeichnet, daß** die aktualisierte Übersicht Informationen aus den aktualisierten Produktinformationen umfaßt, die ein nicht-installiertes Anwendungsprogramm betreffen, das auf der Clienteinrichtung (1) nicht installiert ist, und daß mit der Operation eine automatische Installierung des nicht-installierten Anwendungsprogramms auf der Clienteinrichtung (1) veranlaßt wird, indem ein Installationsprogramm in die Clienteinrichtung (1) geladen und hier ausgeführt wird.

7. Verfahren nach einem der vorangehenden Ansprüche, **dadurch gekennzeichnet, daß** beim Erzeugen der Übersicht mit den installierten Anwendungsprogrammen in Form der erster elektronischer Übersichtsdaten in der Clienteinrichtung (1) eine Betriebsfunktion, die von einem Betriebssystem auf der Clienteinrichtung (1) zur Verfügung gestellt wird, und/oder eine Zusatzfunktion verwendet werden, die zusätzlich zum Betriebssystem auf der Clienteinrichtung (1) implementiert ist.

8. Verfahren nach einem der vorangehenden Ansprüche, **dadurch gekennzeichnet, daß** das Erzeugen der Übersicht mit den installierten Anwendungsprogrammen in Form der erster elektronischer Übersichtsdaten automatisch nach einem Start der Clienteinrichtung (1) ausgeführt wird.

9. Verfahren nach einem der vorangehenden Ansprüche, **dadurch gekennzeichnet, daß** das Erzeugen der Übersicht mit den installierten Anwendungsprogrammen in Form der erster elektronischer Übersichtsdaten als Reaktion auf eine Benutzereingabe ausgeführt wird.

10. Verfahren nach einem der vorangehenden Ansprüche, **dadurch gekennzeichnet, daß** die Übersicht mit den installierten Anwendungsprogrammen in Form der ersten elektronischen Übersichtsdaten in einem Speicher (10) der Clienteinrichtung (1) gespeichert wird.

11. Verfahren nach einem der vorangehenden Ansprüche, **dadurch gekennzeichnet, daß** die installierten Anwendungsprogramme in der Übersicht und/oder die verfügbaren Anwendungsprogramme in der aktualisierten Produktinformation und/oder das eine oder alle der installierten Anwendungsprogramme in der aktualisierten Übersicht in Anwendungsgruppen unterteilt werden.

12. Verfahren nach einem der vorangehenden Ansprüche, **dadurch gekennzeichnet, daß** die Servereinrichtung (4) im Internet (3) gebildet ist und daß die Datenverbindung (2) als eine Internet-Verbindung zwischen der Clienteinrichtung (1) und der Servereinrichtung (4) ausgebildet wird.

13. Clienteinrichtung (1) zur Verwendung beim Ausführen eines Verfahrens nach einem der Ansprüche 1 bis 12, mit:
- installierten Anwendungsprogrammen, die auf der Clienteinrichtung (1) lauffähig installiert sind;
- Erzeugungsmitteln zum Erzeugen einer Übersicht mit den installierten Anwendungsprogrammen in Form erster elektronischer Übersichtsdaten;
- Schnittstellenmitteln (11) zum Ausbilden einer Datenverbindung (2) zwischen der Clienteinrichtung (1) und einer Servereinrichtung (4), wobei über die Datenverbindung (2) elektronische Daten zwischen der Clienteinrichtung (1) und der Servereinrichtung (4) ausgetauscht werden können;
- Empfangsmitteln (12) zum Empfangen von aktualisierten Produktinformationen für verfügbaren Anwendungsprogramme in Form zweiter elektronischer Übersichtsdaten von der Servereinrichtung (1) über die Datenverbindung (2);
- Verarbeitungsmitteln (10) zum Verarbeiten der ersten elektronischen Übersichtsdaten und der zweiten elektronischen Übersichtsdaten in der Clienteinrichtung und zum Erzeugen einer aktualisierten Übersicht mit einem oder allen der installierten Anwendungsprogramme in Form dritter elektronischer Übersichtsdaten, indem zum Erzeugen von Statusdaten, die von den dritten elektronischen Übersichtsdaten umfaßt sind, den ersten elektronischen Übersichtsdaten für das eine oder alle der installierten Anwendungsprogramme elektronische Daten aus den zweiten elektronischen Übersichtsdaten für die verfügbaren Anwendungsprogramme zugeordnet werden; und
- einer Ausgabeeinrichtung (5) zum Ausgeben der aktualisierten Übersicht in Form der dritten elektronischen Übersichtsdaten.
